# EUROPÄISCHE PATENTSCHRIFT

(11) **EP 3 327 329 B1**
(45) Veröffentlichungstag und Bekanntmachung des Hinweises auf die Patenterteilung: **22.04.2020**
(21) Anmeldenummer: 17204005.7
(22) Anmeldetag: 28.11.2017
(51) Int. Cl.: F16L 37/12, F16L 37/14, F16L 37/15, F16L 19/02, F16L 19/065, F16L 37/138

(54) **KUPPLUNG**
COUPLING
COUPLAGE

(30) Priorität: 29.11.2016 DE 102016123031
(43) Veröffentlichungstag der Anmeldung: 30.05.2018
(73) Patentinhaber: Aqseptence Group GmbH, 65326 Aarbergen (DE)
(72) Erfinder: Betz, Reinhold, 21255 Tostedt (DE)
(74) Vertreter: Stoffregen, Hans-Herbert

(56) Entgegenhaltungen:
- EP-A1- 0 023 853
- DE-A1- 3 147 665
- DE-A1- 4 134 086
- DE-A1- 4 227 080
- US-A- 1 823 061
- US-A- 4 037 864
- US-A1- 2005 264 005

## Beschreibung

Die Erfindung bezieht sich auf eine Kupplung für Fluide, wie für mittels Unterdruck abzusaugende Fluide, wie Abwasser, insbesondere Schwarzwasser, umfassend ein Vaterteil und ein Mutterteil, das einen hohlzylindrischen Endabschnitt zur Aufnahme eines endseitigen Abschnitts des Vaterteils, einen drehbaren Außenring sowie ein relativ zu dem Außenring und mit diesem wechselwirkendes verstellbares Verriegelungselement aufweist, das zum Verriegeln in eine vorzugsweise in Außenwandung des endseitigen Abschnitts des Vaterteils verlaufende Aufnahme, wie Vertiefung, eingreift, wobei das Verriegelungselement ein offenes Ringelement oder ein Federelement ist, dessen wirksamer innerer Durchmesser sich in Abhängigkeit von der Stellung des Außenrings ändert, wobei in einer ersten Stellung (Verriegelung) das Ringelement bzw. das Federelement in die Aufnahme eingreift und in einer zweiten Stellung (Entriegelung) Innendurchmesser des Ringelements bzw. Federelements gleich oder größer als Außendurchmesser des endseitigen Abschnitts des Vaterteils ist.

In mobilen Einrichtungen, wie Schiffen, Eisenbahnen oder Flugzeugen, kann anfallendes Abwasser mittels Vakuum abgesaugt werden. Das Abwasser wird in Sammelbehältern gesammelt. Zum Entleeren wird eine sogenannte Absaugpistole benutzt, mittels der das Abwasser abgesaugt wird. Die Absaugpistole weist dabei ein Mutterteil einer Kupplung auf, das mit einem von dem Sammelbehälter ausgehenden Vaterteil, insbesondere einer Camlock-Kupplung, zusammenwirkt. Das Mutterteil weist einen Außenring auf, der radial drehbar ist und mit einem Innenring zusammenwirkt, der von Kugeln durchsetzt ist, die in rampenförmig verlaufenden Vertiefungen des Außenringes geführt sind. In Abhängigkeit der Stellung des Außenrings stehen die Kugeln über dem Innenring vor oder verlaufen zu dessen Innenfläche zurückversetzt. In dieser Stellung kann das Mutterteil von dem Vaterteil abgezogen werden. Im verriegelten Zustand greifen die Kugeln in eine entsprechende Vertiefung des Vaterteils ein, so dass ein Lösen nicht möglich ist.

Das Mutterteil besteht aus Metall, so dass beim Absaugen aggressiver Substanzen zumindest ein Korrodieren erfolgen kann, durch die die Funktion der Kupplung beeinträchtigt wird.

Dadurch, dass zum Verriegeln vorbekannter Kupplungen metallische Bauteile (Kugeln) punktuell mit dem Vaterteil wechselwirken, ist ein schneller Verschleiß des Vaterteils gegeben.

Der US 2 805 089 A ist eine Rohrkupplung zu entnehmen, bei der Vater- und Mutterteil über einen Sprengring gesichert werden.

Aus der DE 202 05 992 U1 ist eine Anordnung zur Abwasserentsorgung und Frischwasserversorgung von Fahrzeugen bekannt. Mittels einer Absaugvorrichtung, die über einen Abwasserschlauch mit einem Unterdruckabwassersystem verbunden ist, kann Abwasser aus Benzinfahrzeugen abgesaugt werden.

Eine Klemmverschraubung für Rohre ist der DE 42 27 080 A1 zu entnehmen. Dabei wird ein Rohr von einem Gegenstück aufgenommen, auf das eine Überwurfmutter schraubbar ist, mittels der ein Dichtring gegen das Rohr pressbar ist.

Bei einer Rohrkupplung nach der US 4,037,864 A wird ein Rohrabschnitt von einer Mutter aufgenommen, in die eine Hülse schraubbar ist, zwischen der und dem Rohrabschnitt ein Klemmring als Abdichtung verläuft.

Bei einer Kupplung nach der US 1,823,061 A wird ein Rohrende von einem Vaterteil aufgenommen, das in ein Mutterteil schraubbar ist. Auf das Vaterteil ist eine Überwurfmutter schraubbar, zwischen der und der Außenumfangsfläche des Rohres eine Dichtung klemmbar ist.

Um ein Rohr mit einem Fitting zu verbinden, ist nach der US 2005/0264005 A1 auf dieses eine Überwurfmutter schraubbar, über die eine Dichtung gegen ein Zwischenstück klemmbar ist, das zwischen dem Fitting und dem Rohr verläuft.

Gegenstand der DE 31 47 665 A1 ist eine Schlauchverbindung, die ein als Gewindehülse ausgebildetes Mutterteil und ein Muffenteil aufweist, zwischen denen eine Dichtung klemmbar ist, die in einen Abschnitt eines Rohres eingreift.

Der vorliegenden Erfindung liegt die Aufgabe zugrunde, eine Kupplung der eingangs genannten Art so weiterzubilden, dass eine hinreichende Funktionstüchtigkeit gegeben ist. Bei konstruktiv einfachem Aufbau soll eine hohe Dichtigkeit gegeben sein.

Zur Lösung der Aufgabe wird eine Kupplung nach Anspruch 1 vorgeschlagen. Demnach weist der Endabschnitt des Mutterteils einen Stirnrand auf, der zur Bildung einer konisch erweiterten Öffnung des Mutterteils eine nach innen gerichtete Abschrägung aufweist, dass auf den Endabschnitt der Außenring schraubbar ist, der einen senkrecht zur axialen Verstellrichtung des Außenrings verlaufenden Abschnitt aufweist, dessen wirksamer freier Durchmesser kleiner als Außendurchmesser des Endabschnitts und größer als Außendurchmesser des Vaterteils ist, dass das Verriegelungselement zwischen Stirnfläche des Endabschnitts und dem senkrecht zur Verstellrichtung verlaufenden Abschnitt des Außenrings angeordnet ist und dass der Außenring ein Anschlagelement und der Endabschnitt einen Anschlag beabstandet zum Stirnrand aufweisen, an dessen stirnrandabgewandter Seite das Anschlagelement in der zweiten Stellung anliegt.

Abweichend von vorbekannten Kupplungen wird eine einfache robuste Konstruktion vorgeschlagen, bei der durch das als Klemmring zu bezeichnende offene Ringelement eine sichere form- und kraftschlüssige Verbindung zwischen Mutter- und Vaterteil ermöglicht wird.

Anstelle eines Klemmrings kann auch eine Spiralfeder verwendet werden, die eine Ringform aufweist.

Das Mutterteil mit seinen Bauteilen kann aus Kunststoff hergestellt sein, so dass sich zu den bekannten aus Metall bestehenden Konstruktionen sowohl herstellungs- als auch gewichtsmäßige Vorteile ergeben. Weder Kugeln noch Führungen für solche sind erforderlich. Ein offener Klemmring oder ein ringförmig verlaufendes Federelement wird benötigt, der bzw. das in seinem wirksamen Durchmesser derart verstellt wird, dass entweder das Vaterteil zu dem Mutterteil fixiert oder aus diesem abziehbar ist. Abweichend von vorbekannten Kupplungen greift zum Verriegeln von Mutter- und Vaterteil umlaufend und nicht punktuell ein Verriegelungselement in Form des Klemmrings oder Federelements in das Vaterteil ein, so dass kein oder nur ein geringer Verschleiß auftreten kann. Es besteht ferner die Möglichkeit, die Verriegelung in gewünschten Dimensionen zu bauen, und zwar in Abhängigkeit von Bedarf und Einsatz. Die Verriegelung ist funktionsmäßig nicht an bekannte Camlock-Kupplungen gebunden. Es kann ein beliebiges anderes Gegenstück zum Einsatz gelangen, sofern durchmessermäßig eine Anpassung erfolgt und die erforderliche Aufnahme, wie Vertiefung bzw. Hinterschneidung, zur Aufnahme des Verriegelungselementes vorhanden ist.

Insbesondere ist vorgesehen, dass in der ersten Stellung das Ringelement zwischen dem Außenring und dem hohlzylindrischen Endabschnitt des Mutterteils fixiert ist.

In hervorzuhebender Ausgestaltung sieht die Erfindung vor, dass das Ringelement eine an die Abschrägung des Endabschnitts angepasste Außenfläche aufweist, die bei Drehen des Außenrings entlang der Abschrägung gleitet.

Um das Entlanggleiten des Federelements bzw. des Ringelements zu der nach innen abgeschrägten Stirnfläche des Endabschnitts des Mutterteils auf einfache Weise sicherzustellen, schlägt die Erfindung vor, dass der Außenring zu dessen gleichzeitigem radialen und axialen Verstellen über ein Gewinde mit dem Endabschnitt des Mutterteils verbunden ist.

Um das Federelement bzw. das Ringelement eindeutig zu positionieren und führen zu können, ist vorgesehen, dass unabhängig von der Stellung des Außenrings das Ringelement sowohl Innenseite des Abschnitts als auch den Stirnrand kontaktiert.

Der Innendurchmesser des äußeren Abschnitts des Außenrings ist kleiner als Außendurchmesser des hohlzylindrischen Endabschnitts des Mutterteils im Stirnbereich. Um sicherzustellen, dass der Außenring nicht ungewollt von dem hohlzylindrischen Endabschnitt des Mutterteils gelöst werden kann, ist erfindungsgemäß vorgesehen, dass der Außenring ein Anschlagelement und der Endabschnitt einen Anschlag, beabstandet zum Stirnrand, aufweisen, an dessen stirnrandabgewandter Seite das Anschlagelement in der zweiten Stellung anliegt.

Dabei wird insbesondere der Anschlag durch eine Stufe in der Umfangswandung des Endabschnitts gebildet.

Um das radiale Verstellen bei gleichzeitiger axialer überlagerter Bewegung zu ermöglichen, sollte von dem Außenring ein Betätigungselement, wie abragender Hebel, ausgehen.

Insbesondere ist vorgesehen, dass das Ringelement ein aus Kunststoff, insbesondere aus POM, PP oder PA, oder Gummi bestehender Ring ist.

Die Erfindung zeichnet sich auch dadurch aus, dass das Federelement als Verriegelungselement eine einen Torus bildende Feder, wie Spiralfeder, ist.

Die Erfindung bezieht sich auch auf eine Verwendung zuvor erläuterter Kupplung für eine Absaugpistole zum Absaugen von Fluiden, wie mittels Unterdruck abzusaugender Fluide, wie Abwasser, insbesondere Schwarzwasser, aus einem Behälter.

Eine entsprechende Absaugpistole ist insbesondere zum Absaugen von Abwasser aus mobilen Einrichtungen, wie Schiffen, Eisenbahnwagen oder Flugzeugen, bestimmt, ohne dass hierdurch eine Beschränkung der erfindungsgemäßen Lehre erfolgt.

Die erfindungsgemäße Kupplung ist zum Verbinden von Schläuchen, Rohren oder sonstige Fluide, insbesondere Flüssigkeiten, führende Einrichtungen geeignet, um auf einfache Weise eine sichere und den Anforderungen entsprechende dichte Verbindung herzustellen.

Weitere Einzelheiten, Vorteile und Merkmale der Erfindung ergeben sich nicht nur aus den Ansprüchen, sondern auch aus der nachfolgenden Beschreibung eines bevorzugten Ausführungsbeispiels.

Es zeigen:
- Fig. 1: einen Längsschnitt durch eine Kupplung im entriegelten Zustand,
- Fig. 2: einen Querschnitt der Kupplung im Bereich eines Klemmrings,
- Fig. 3: die Kupplung nach Fig. 1 in verriegelter Position,
- Fig. 4: einen Querschnitt der Kupplung im Bereich des Klemmrings,
- Fig. 5: eine Absaugpistole mit Absaugventil und
- Fig. 6: eine Spiralfeder.

Den Figuren, in denen gleiche Elemente mit gleichen Bezugszeichen versehen sind, ist eine Prinzipdarstellung einer Kupplung zu entnehmen, über die Fluide, wie Flüssigkeiten, insbesondere Abwasser, geführt werden. Als beispielhafter Einsatz soll eine Verwendung zum Absaugen von Abwasser genannt sein, das aus einem Sammelbehälter einer mobilen Einrichtung, wie Schiff, Eisenbahnwagen oder Flugzeug, abgesaugt wird. Die Kupplung kann aber auch als Verbindung von Schläuchen und/oder Rohren benutzt werden, wie diese in der Industrie oder bei der Feuerwehr zum Einsatz gelangen.

Die Kupplung 10 weist ein Vaterteil 12 auf, bei dem es sich z .B. um ein Vaterteil einer Camlock-Kupplung handeln kann. Das Vaterteil 12 ist in ein Mutterteil 14 steckbar, das z. B. als Kupplungskrone einer Absaugpistole ausgebildet ist, also Teil der Absaugpistole sein kann. Das nachstehend als Kupplungskrone bezeichnete Mutterteil 14 weist einen hohlzylindrischen Endabschnitt 16 auf, der innenseitig von einer Stufe 18 begrenzt wird, an der eine Flachdichtung 20 anliegt, gegen die bei verriegelter Kupplung Stirnfläche 22 des Vaterteils 12 bzw. endseitigen Abschnitts 17 von diesem dichtend anliegt.

Der Endabschnitt 16 der Kupplungskrone 14 geht seinerseits über eine Stufe 24 in einen endseitigen Abschnitt 26 mit einem Außendurchmesser über, der größer als öffnungsfemliegender Abschnitt 28 der Kupplungskrone 14 ist.

Der vordere Abschnitt 26 weist eine nach innen gerichtete Abschrägung 30 auf, so dass sich eine nach außen konisch erweiternde Öffnung ergibt. Ferner weist der äußere Abschnitt 26 ein Außengewinde 32 auf, auf dem ein als Kupplungsring 34 bezeichneter Außenring geschraubt ist, so dass dieser bei einer radialen Bewegung gleichzeitig axial verstellt wird.

Der Kupplungsring 34 weist öffnungsseitig einen senkrecht zur axialen Verstellrichtung verlaufenden Abschnitt 36 auf, der umlaufend ausgebildet ist. Der wirksame freie Durchmesser des Abschnitts 36 ist dabei kleiner als der Außendurchmesser des äußeren Abschnitts 26 der Kupplungskrone 14, jedoch grösser als der Außendurchmesser des Vaterteils 12, so dass ein problemloses Einstecken bzw. Herausziehen des Vaterteils 12 in die Kupplungskrone 14 bzw. aus dieser ermöglicht wird.

Des Weiteren weist der Kupplungsring 34 ein als Anschlagwinkel ausgebildetes Anschlagelement 38 auf, das einen gleichfalls senkrecht zur axialen Verstellrichtung des Kupplungsrings 34 verlaufenden Abschnitt 40 aufweist, der mit der Stufe 24 wechselwirken kann, der den äußeren Abschnitt 26 der Kupplungskrone 14 begrenzt. Zwischen dem senkrecht zur Verstellrichtung verlaufenden Abschnitt 36 des Kupplungsrings 34 und dem geneigt zur Verstellrichtung verlaufenden inneren Rand 30 (Stirnfläche) der Kupplungskrone 14 ist ein Verriegelungselement ; angeordnet das in den Ausführungsbeispielen als offenes Ringelement 42 ausgebildet ist. Das Ringelement 42 kann als Klemmring bezeichnet werden, der im Schnitt die Form eines ungleichschenkligen Trapezes aufweist, wie die Schnittdarstellung verdeutlicht. Dabei verläuft die Basisfläche 44 des Klemmrings 42 parallel zur Innenfläche des Abschnitts 36 des Kupplungsrings 34 und eine Seitenfläche 46 parallel zur geneigt zur Längsachse der Kupplungskrone verlaufenden Stirnfläche 30 des Abschnitts 26 der Kupplungskrone 14.

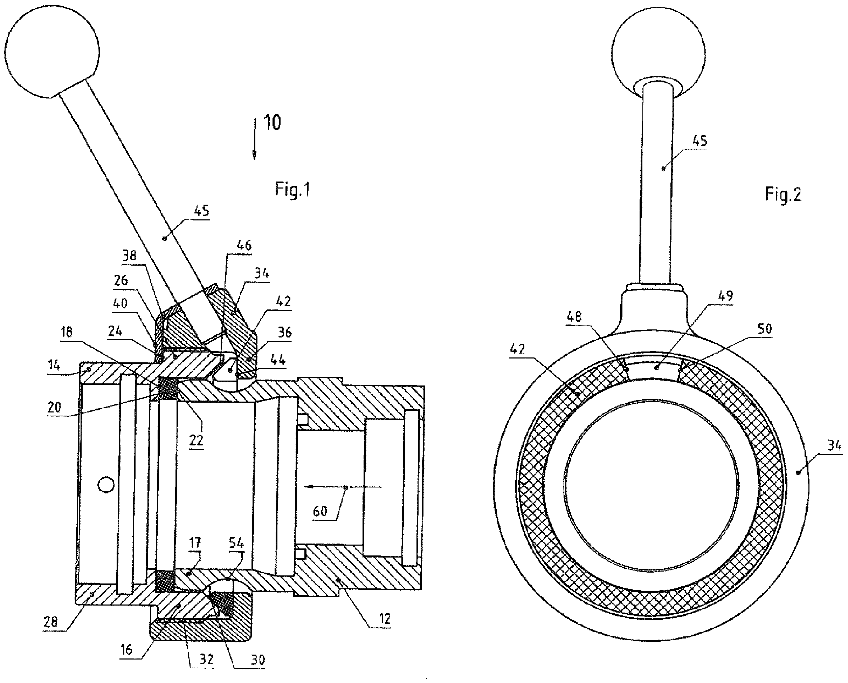

Wie sich aus der Schnittdarstellung gemäß Fig. 1 des Weiteren ergibt, liegt der Klemmring 42 auch in entriegelter Position mit der Grundfläche 44 und der Seitenfläche 46 an den zugewandten Flächen des Abschnitts 36 des Kupplungsrings 34 bzw. der Stirnfläche 30 der Kupplungskrone 14 an. Dies wird dadurch sichergestellt, dass der lichte Abstand zwischen Innenseite des Abschnitts 40 des Anschlagsrings 38 und der Innenfläche des Abschnitts 36 des Kupplungsrings 34 derart zueinander ausgelegt sind, dass der sich durch die Eigenspannung aufweitende Klemmring 42 sich an den entsprechenden Flächen des Kupplungsrings 34 und der Kupplungskrone 14 anlegt.

Die Schnittdarstellung gemäß Fig. 2 verdeutlicht, dass der Klemmring 42 derart ausgebildet ist, dass in entriegelter Position der Kupplung 10 ein relativ großer Spalt 49 zwischen den einander zugewandten Stirnflächen 48, 50 des offenen Klemmrings 42 vorhanden ist.

Das Drehen des Kupplungsrings 34 erfolgt vorzugsweise mittels eines von dem Kupplungsring 34 ausgehenden Hebels 45. Die Drehbewegung wird aufgrund des Gewindes 32 von einer axialen Bewegung überlagert, so dass der Kupplungsring 34 in Richtung des Pfeils 60 verstellt wird mit der Folge, dass die Seitenfläche 46 des Klemmrings 42 entlang der Stirnfläche 30 der Kupplungskrone 14 zum Inneren der Kupplung 10 hingleitet und damit in Richtung einer umlaufenden im Schnitt kreisbogenförmigen, also eine konkave Geometrie aufweisenden Vertiefung 54 in dem Vaterteil 12. Gleichzeitig wird der Spalt 49 zwischen den Stirnflächen 48, 50 des Klemmrings 42 verringert. Hierdurch bedingt wird der wirksame Durchmesser des Klemmrings 42 reduziert, so dass dieser in die umlaufende Vertiefung 54 des Vaterteils 12 eindringt. Hierdurch erfährt das Vaterteil 12 eine Kraftbeaufschlagung in Richtung des Pfeils 50, wodurch die Stirnfläche 22 des Vaterteils 12 an die Flachdichtung 20 gepresst wird. Gleichzeitig wird das Vaterteil 12 zwischen dem Klemmring 42 und der Flachdichtung 20 klemmend fixiert, so dass eine Verriegelung des Vaterteils 12 bei gleichzeitigem abdichtenden Anliegen an der Flachdichtung 20 gegeben ist.

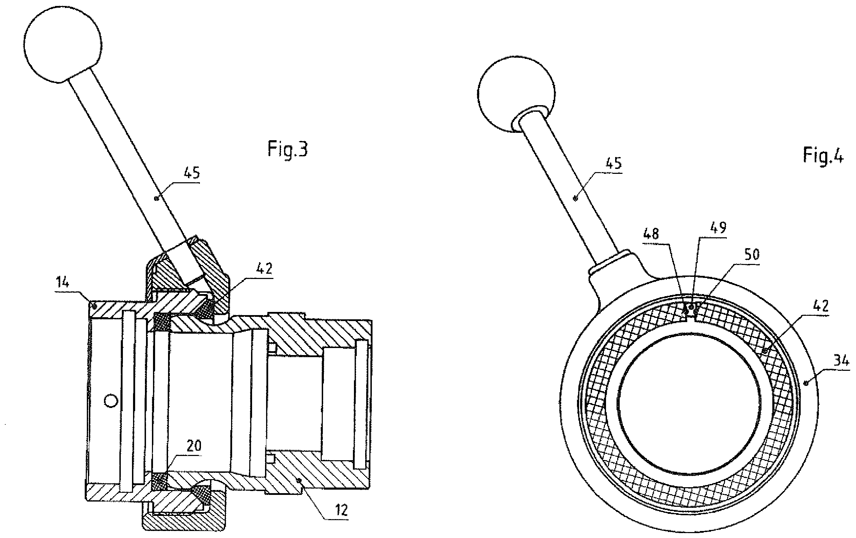

Wie die Schnittdarstellung gemäß Fig. 4 verdeutlicht, ist in dieser Position der Spalt 49 zwischen den Stirnflächen 48, 50 des offenen Klemmrings 42 sehr klein.

Durch die erfindungsgemäße Lehre wird über den Klemmring 42 das Vaterteil 12 gegen die Flachdichtung 20 gepresst, so dass eine abdichtende Verbindung zwischen dem Vaterteil 12 und der Kupplungskrone 14, also dem Mutterteil, herrscht. Gleichzeitig ist sichergestellt, dass Kupplungskrone 14 und Vaterteil 12 nicht auseinandergezogen werden können.

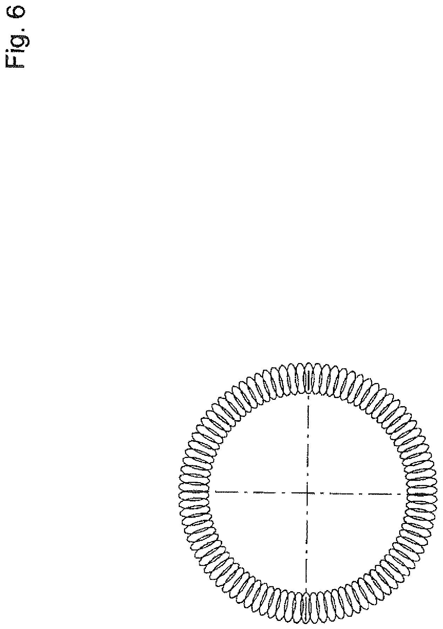

Ist erwähntermaßen die Erfindung anhand eines offenen Klemmrings 42 erläutert worden, so besteht auch die Möglichkeit, dass anstelle eines Klemmrings als Verriegelungselement ein Federelement (Fig. 6) benutzt wird, das die gleichen Funktionen ausübt. Dabei handelt es sich insbesondere um eine Spiralfeder, die als Torus geformt ist, um in die Aufnahme 54 eingreifen oder aus dieser entfernt zu werden, und zwar entsprechend der zuvor erläuterten Verfahrensweise.

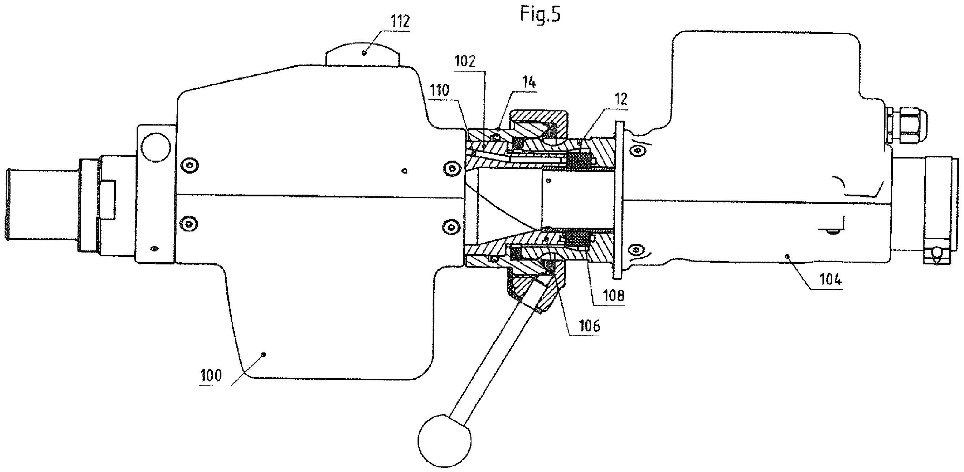

In Fig. 5 ist in Prinzipdarstellung eine Absaugpistole 100 dargestellt, die die mit einem von der Absaugpistole 100 abragenden Stutzen 102 verbundene erfindungsgemäße Kupplungskrone 14 aufweist. Ferner ist ein Absaugventil 104 dargestellt, das mit einem nicht dargestellten Sammelbehälter insbesondere einer mobilen Einrichtung, wie Schiff, Eisenbahnwagen, Flugzeug, verbunden ist. Von dem Absaugventil 104 geht das Vaterteil 12 aus, das in die Kupplungskrone 14 eingesetzt ist. Man erkennt des Weiteren, dass der Stutzen 102 mit einem Endabschnitt 106 in das Vaterteil 12 eingreift. Der Endabschnitt 106 weist stirnseitig eine Dichtung 108 auf, die beim Zusammensetzen von Mutter- und Vaterteil 14, 12 in einem Umfang zusammengedrückt wird, dass eine Verbindung zwischen einer Unterdruck führenden Leitung 110 und einer zu dem Absaugventil 104 führenden Leitung herstellbar ist, um das Absaugventil 104 mit Unterdruck zu beaufschlagen und somit betätigen zu können. Hierzu ist es zuvor erforderlich, dass bei verriegelter Kupplung ein Betätigungsknopf 112 betätigt wird.

Die Kupplungskrone 14 kann aus Kunststoff bestehen, wobei bevorzugterweise folgende Materialien anzugeben sind: POM (Polyoxymethylen), PP (Polypropylen), PA (Polyamid) und je nach Einsatzbereich alle anderen robusten Kunststoffe. Selbstverständlich kann die Kupplungskrone 14 auch aus Metall oder teilweise aus Metall bestehen.

Als Material für den Klemmring 42 ist bevorzugterweise anzugeben: POM, PP, PA und je nach Einsatzbereich alle anderen robusten Kunststoffe. Metall ist auch möglich. Das Verriegelungselement bzw. der Klemmring 42 kann auch aus weichen Werkstoffen hergestellt werden, wie z.B. weichen Kunststoffen oder anderen Elastomeren. In diesem Fall wird das Verriegelungselement gestaucht und in die Aufnahme 54 hineingedrückt.

Auch eine Spiralfeder anstatt eines Kunststoffrings oder eines Gummirings kann die Funktion des Verriegelungselements erfüllen.

## Patentansprüche

1. Kupplung (10) für Fluide, wie für mittels Unterdruck abzusaugende Fluide, wie Abwasser, insbesondere Schwarzwasser, umfassend ein Vaterteil (12) und ein Mutterteil (14), das einen hohlzylindrischen Endabschnitt (16) zur Aufnahme eines endseitigen Abschnitts (17) des Vaterteils, einen drehbaren Außenring (34) sowie ein relativ zu dem Außenring und mit diesem wechselwirkendes verstellbares Verriegelungselement (42) aufweist, das zum Verriegeln in eine im endseitigen Abschnitt des Vaterteils vorhandene Aufnahme (54), wie Vertiefung, eingreift, wobei das Verriegelungselement (42) ein offenes Ringelement oder ein Federelement ist, dessen wirksamer innerer Durchmesser sich in Abhängigkeit von der Stellung des Außenrings (34) ändert, wobei in einer ersten Stellung (Verriegelung) das Ringelement bzw. das Federelement in die Aufnahme (54) eingreift und in einer zweiten Stellung (Entriegelung) Innendurchmesser des Ringelements bzw. Federelements gleich oder größer als Außendurchmesser des endseitigen Abschnitts (17) des Vaterteils (12) ist,
wobei der Endabschnitt (16) des Mutterteils (14) einen Stirnrand aufweist, der zur Bildung einer konisch erweiterten Öffnung des Mutterteils (14) eine nach innen gerichtete Abschrägung (30) aufweist, dass auf den Endabschnitt (26) der Außenring (34) schraubbar ist, der einen senkrecht zur axialen Verstellrichtung des Außenrings verlaufenden Abschnitt (36) aufweist, dessen wirksamer freier Durchmesser kleiner als Außendurchmesser des Endabschnitts und größer als Außendurchmesser des Vaterteils (12) ist, dass das Verriegelungselement zwischen Stirnfläche (30) des Endabschnitts und dem senkrecht zur Verstellrichtung verlaufenden Abschnitt des Außenrings angeordnet ist,
**dadurch gekennzeichnet,**
**dass** der Außenring (34) ein Anschlagelement (38) und der Endabschnitt (16) einen Anschlag (24) beabstandet zum Stirnrand (30) aufweisen, an dessen stirnrandabgewandter Seite das Anschlagelement in der zweiten Stellung anliegt.

2. Kupplung nach Anspruch 1,
**dadurch gekennzeichnet.**
**dass** in der ersten Stellung das Ringelement (42) zwischen dem Außenring (34) und dem hohlzylindrischen Endabschnitt (16) des Mutterteils (14) fixiert ist.

3. Kupplung nach Anspruch 1 oder 2,
**dadurch gekennzeichnet,**
**dass** das Ringelement (42) eine an die Abschrägung (30) des Endabschnitts (16) angepasste Außenfläche (46) aufweist, die bei Drehen des Außenrings (34) entlang der Abschrägung gleitet.

4. Kupplung nach einem der vorhergehenden Ansprüche,
**dadurch gekennzeichnet,**
**dass** der Außenring (34) zur gleichzeitigen radialen und axialen Verstellung des Verriegelungselements (42) über ein Gewinde (32) mit dem Endabschnitt (16) des Mutterteils (14) verbunden ist.

5. Kupplung nach einem der vorhergehenden Ansprüche,
**dadurch gekennzeichnet,**
**dass** unabhängig von der Stellung des Außenrings (34) das Ringelement (42) sowohl Innenseite (44) des senkrecht zur axialen Verstellrichtung verlaufenden Abschnitts (36) als auch den Stirnrand (30) kontaktiert.

6. Kupplung nach Anspruch 1,
**dadurch gekennzeichnet,**
**dass** der Anschlag (24) durch eine Stufe in der Umfangswandung des Endabschnitts (16) gebildet ist.

7. Kupplung nach einem der vorhergehenden Ansprüche,
**dadurch gekennzeichnet,**
**dass** von dem Außenring (34) ein Betätigungselement (45), wie abragender Hebel, ausgeht.

8. Kupplung nach einem der vorhergehenden Ansprüche,
**dadurch gekennzeichnet,**
**dass** das Ringelement (42) ein aus Kunststoff, insbesondere POM, PP oder PA, oder Gummi bestehender Ring ist.

9. Kupplung nach einem der vorhergehenden Ansprüche,
**dadurch gekennzeichnet,**
**dass** das Federelement als das Verriegelungselement eine einen Torus bildende Feder wie Spiralfeder ist.

10. Verwendung der Kupplung nach einem der vorhergehenden Ansprüche für eine Absaugpistole zum Absaugen von Fluiden, wie mittels Unterdruck abzusaugender Fluide, wie Abwasser, insbesondere Schwarzwasser, aus einem Behälter.

## Claims

1. Coupling (10) for fluids, such as for fluids to be extracted by means of vacuum pressure, such as waste water, in particular black water, comprising a male part (12) and a female part (14) that has a hollow-cylindrical end section (16) for receiving an end-side section (17) of the male part, a rotatable outer ring (34), and a locking element (42) adjustable relative to the outer ring and interacting therewith which engages in a receptacle (54), such as a recess, provided in the end-side section of the male part for locking, the locking element (42) being an open ring element or a spring element whose effective inner diameter changes depending on the position of the outer ring (34), the ring element or spring element engaging in the receptacle (54) in a first position (locked) and the inner diameter of the ring element or spring element being equal to or greater than the outer diameter of the end-side section (17) of the male part (12) in a second position (unlocked), where
the end section (16) of the female part (14) has a front edge having an inward-facing bevel (30) for forming a conically widened opening of the female part (14), the outer ring (34) being screwable onto the end section (26) and having a section (36) vertical to the axial adjustment direction of the outer ring and whose effective free diameter is smaller than the outer diameter of the end section and greater than the outer diameter of the male part (12), and the the locking element being arranged between the front face (30) of the end section and that section of the outer ring vertical to the adjustment direction,
wherein
the outer ring (34) has a stop element (38) and the end section (16) has a stop (24) at a distance from the front edge (30) with whose side facing away from said front edge the stop element is in contact in the second position.

2. Coupling according to claim 1,
wherein
in the first position the ring element (42) is fixed between the outer ring (34) and the hollow-cylindrical end section (16) of the female part (14).

3. Coupling according to claim 1 or 2,
wherein
the ring element (42) has an outer face (46) matched to the bevel (30) of the end section (16) and which slides along the bevel when the outer ring (34) is rotated.

4. Coupling according to one of the preceding claims,
wherein
the outer ring (34) is connected to the end section (16) of the female part (14) via a thread (32) for simultaneous radial and axial adjustment of the locking element (42).

5. Coupling according to one of the preceding claims,
wherein
independently of the position of the outer ring (34) the ring element (42) contacts both the inside (44) of that section (36) vertical to the axial adjustment direction and the front edge (30).

6. Coupling according to claim 1,
wherein
the stop (24) is formed by a step in the peripheral wall of the end section (16).

7. Coupling according to one of the preceding claims,
wherein
an actuating element (45), such as a protruding lever, extends from the outer ring (34).

8. Coupling according to one of the preceding claims,
wherein
the ring element (42) is a ring consisting of plastic, in particular POM, PP or PA, or of rubber.

9. Coupling according to one of the preceding claims,
wherein
the spring element as the locking element is a spring forming a torus, such as a coil spring.

10. Use of the coupling according to one of the preceding claims for an extraction pistol for extraction of fluids, such as fluids to be extracted by vacuum pressure, such as waste water, in particular black water, from a container.

## Revendications

1. Couplage (10) pour fluides tels que des fluides à aspirer par dépression, tels que des eaux usées, notamment des eaux noirs, comprenant une partie mâle (12) et une partie femelle (14) qui présente une section terminale en forme de cylindre creux (16) servant à accueillir une section côté extrémité (17) de la partie mâle, une bague extérieure rotative (34) ainsi qu'un élément de verrouillage (42) déplaçable relativement par rapport à la bague extérieure et de manière à interagir avec celle-ci, lequel élément de verrouillage s'engage, pour verrouiller, dans un logement (54), tel un renfoncement, présent dans la section côté extrémité de la partie mâle, sachant que l'élément de verrouillage (42) est un élément annulaire ouvert ou un élément à ressort dont le diamètre intérieur utile change en fonction de la position de la bague extérieure (34), sachant que dans une première position (verrouillage), l'élément annulaire ou l'élément à ressort s'engage dans le logement (54) et que dans une seconde position (déverrouillage), le diamètre intérieur de l'élément annulaire ou de l'élément à ressort est supérieur ou égal au diamètre extérieur de la section côté extrémité (17) de la partie mâle (12),
sachant que
la section terminale (16) de la partie femelle (14) présente un bord frontal qui présente un chanfrein (30) orienté vers l'intérieur pour former une ouverture évasée de forme conique de la partie femelle (14), que la bague extérieure (34) est vissable sur la section terminale (26), laquelle bague extérieure présente une section (36) s'étendant perpendiculairement au sens de déplacement axial de la bague extérieure, dont le diamètre libre utile est inférieur au diamètre extérieur de la section terminale et supérieur au diamètre extérieur de la partie mâle (12), que l'élément de verrouillage est disposé entre la surface frontale (30) de la section terminale et la section de la bague extérieure s'étendant perpendiculairement au sens de déplacement,
**caractérisé en ce**
**que** la bague extérieure (34) présente un élément de butée (38) et que la section terminale (16) présente une butée (24) écartée du bord frontal (30), l'élément de butée dans la seconde position reposant sur le côté opposé au bord frontal de la butée.

2. Couplage selon la revendication 1
**caractérisé en ce**
**que** dans la première position, l'élément annulaire (42) est fixé entre la bague extérieure (34) et la section terminale en forme de cylindre creux (16) de la partie femelle (14).

3. Couplage selon la revendication 1 ou 2,
**caractérisé en ce**
**que** l'élément annulaire (42) présente une surface extérieure (46) adaptée au chanfrein (30) de la section terminale (16) qui glisse le long du chanfrein lors de la rotation de la bague extérieure (34).

4. Couplage selon une des revendications précédentes,
**caractérisé en ce**
**que** la bague extérieure (34) est reliée à la section terminale (16) de la partie femelle (14) par le biais d'un filetage (32), pour le déplacement simultané dans le sens radial et axial de l'élément de verrouillage (42).

5. Couplage selon une des revendications précédentes,
**caractérisé en ce**
**qu'**indépendamment de la position de la bague extérieure (34), l'élément annulaire (42) touche aussi bien le côté intérieur (44) de la section (36) s'étendant perpendiculairement au sens de déplacement axial que le bord frontal (30).

6. Couplage selon la revendication 1,
**caractérisé en ce**
**que** la butée (24) est formée par un épaulement dans la paroi circonférentielle de la section terminale (16).

7. Couplage selon une des revendications précédentes,
**caractérisé en ce**
**qu'**un élément d'actionnement (45), tel un levier saillant, part de la bague extérieure (34).

8. Couplage selon une des revendications précédentes,
**caractérisé en ce**
**que** l'élément annulaire (42) est une bague en plastique, notamment en POM, PP ou PA, ou en caoutchouc.

9. Couplage selon une des revendications précédentes,
**caractérisé en ce**
**que** l'élément à ressort servant d'élément de verrouillage est un ressort formant un tore, tel qu'un ressort spiral.

10. Utilisation du couplage selon une des revendications précédentes pour un pistolet d'aspiration pour aspirer, d'un récipient, des fluides tels que des fluides à aspirer par dépression, tels que des eaux usées, notamment des eaux noirs.
